# EUROPÄISCHE PATENTSCHRIFT

(11) **EP 1 658 719 B1**
(45) Veröffentlichungstag und Bekanntmachung des Hinweises auf die Patenterteilung: **26.12.2007**
(21) Anmeldenummer: 04731015.6
(22) Anmeldetag: 04.05.2004
(51) Int. Cl.: H04M 7/00, H04L 29/06

(54) **Verfahren zur Steuerung eines Media Gateways**
Method for controlling a Media Gateway
Procédé de gestion d'une passerelle média

(30) Priorität: 26.08.2003 DE 10339279
(43) Veröffentlichungstag der Anmeldung: 24.05.2006
(73) Patentinhaber: NOKIA SIEMENS NETWORKS GMBH & CO. KG, 81541 München (DE)
(72) Erfinder: LÖBIG, Norbert, 64291 Darmstadt (DE)
(86) Internationale Anmeldenummer: PCT/EP2004/050695
(87) Internationale Veröffentlichungsnummer: WO 2005/022881

(56) Entgegenhaltungen:
- EP-A- 1 056 256
- DE-A- 10 063 081
- US-B1- 6 674 713
- CUERVO F ET AL: "Megaco Protocol Version 1.0" RFC 3015, November 2000 (2000-11), XP002285435

## Beschreibung

Die Erfindung betrifft ein Verfahren gemäss dem Oberbegriff von Patentanspruch 1.

Neuere Kommunikationsarchitekturen, die paket- oder zellbasierte Verfahren zur Sprachsignalübertragung wie beispielsweise Voice over IP (VoIP) oder Voice over ATM (VoATM) nutzen, sehen die Trennung der Übertragung von Signalisierungsinformationen und Nutzinformationen vor. Hierzu werden die Netzwerke in Einheiten, die dem Transport der Nutzinformationen (Träger oder Bearer) dienlich sind, sowie in Einheiten zur Steuerung dieser Nutzverbindungen (Bearer Control) aufgeteilt. Um eine Kommunikation mit herkömmlichen leitungsvermittelten Telekommunikationsnetzen weiterhin zu ermöglichen, ist eine "Übersetzung" zwischen diesen beiden unterschiedlichen Kommunikationsarchitekturen erforderlich, die in Kopplungspunkten vorgenommen wird. An einem solchen Kopplungspunkt werden die Nutzverbindungen mittels spezieller, als Media Gateways bezeichneten Servern in die benutzte Transporttechnologie umgewandelt. Media Gateways besitzen damit sowohl Schnittstellen zu PSTN/ ISDN- als auch IP/ ATM-Netzwerken und bilden damit die Schnittstellen zwischen leitungsvermittelnden und paketorientierten Netzen. Sie können in Echtzeit TDM (Time Division Multiplexing) Sprachdaten in VoIP/ VoATM-Daten umwandeln und umgekehrt.

Die Media Gateways werden von zentralen Instanzen, den Media Gateway Controllern (MGC) oder Call Feature Servern, gesteuert. Diese dienen im wesentlichen der Koordination der Media Gateways und überwachen/ steuern Verbindungen (Bearerverbindungen) zwischen den Media Gateways. Die Steuerung erfolgt mit Hilfe spezieller Protokolle wie dem MGCP (Media Gateway Controller Protocol) oder dem H.248-Protokoll.

Die bislang über herkömmliche leitungsvermittelte Telekommunikationsnetze geführte Kommunikation zwischen ein/ mehreren Teilnehmern wie beispielsweise ISDN/ PSTN Teilnehmern kann damit über IP Netze geführt werden. Als Endgeräte können beispielsweise herkömmliche ISDN/ PSTN Endgeräte an Abschlusseinrichtungen IAD (Integrated Access Devices) von xDSL-Strecken, an Abschlusseinrichtungen MTA (Multimedia Termnal Adapter) in/ hinter Kabelmodems oder aber auch IP-basierte Endgeräte mit entsprechender IP-basierter Signalisierung (H.323/ SIP) eingesetzt werden.

Da Kommunikationssysteme -/netze bislang auf TDM/ IP/ (ATM) Basis realisiert worden sind, ergeben sich nun vom Standpunkt der zugrunde liegenden Philosophie gravierende Unterschiede zwischen z. B. TDM- basierten und IP- basierten Netzen:

In der TDM-Welt werden die an eine Vermittlungsstelle angeschlossen Schnittstellen zu Teilnehmerkonzentratoren und Access Networks hin ausschliesslich von dieser gesteuert. Die teilnehmernahen Einrichtungen (Teilnehmeranschlusskonzentrator oder Accces Network) können zwar Einfluss auf etwaige Ersatzschaltungen nehmen, oberste Instanz bleibt aber die Vermittlungsstelle, von der allein entschieden wird, wie diese Einrichtungen zu betreiben sind (Beispiel hierfür ist die V5.2-Schnittstelle).

In der IP-basierten Welt hat das dem Access Network entsprechende Access Gateway, das die Funktion eines Media Gateway hat, die Freiheit, sich alternativ bei mehreren Vermittlungsstellen anzumelden. In jedem Falle meldet sich das Access Gateway/ Media Gateway bei einer paketbasierten Vermittlungsstelle (Media Gateway Controller oder Call Feature Server) an und kann fortan mit dieser den Vermittlungsbetrieb aufnehmen. Gleichzeitig ist es für weitere paketbasierte Vermittlungsstellen nicht existent und auch nicht ansprechbar. (Beispiel hierfür sind Access Gateways und Media Gateway Controller, die über ein H.248 Protokoll kommunizieren).

Diese unterschiedlichen Philosophien zwischen der TDM-/ IP Welt ziehen gravierende Konsequenzen nach sich. Dies betrifft vor allem Ersatzschalteverfahren zwischen den Access Gateways/ Media Gateways und den diese steuernden Einrichtungen (Media Gateway Controller oder Call Feature Server). Die paketbasierte Vermittlungsstelle (Media Gateway Controller oder Call Feature Server) zur unmittelbaren Verarbeitung von Teilnehmersignalisierung ist hierbei als ein einer konventionellen, lokalen Vermittlungsstelle entsprechendes Netzelement ausgebildet. Demzufolge steht ihr auf der Teilnehmerseite eine Mehrzahl von über das Paketnetz ansprechbaren Teilnehmerzugangsnetzen gegenüber (Access Gateway (AGW)), die von Media Gateway Controllern über periphere Einrichtungen gesteuert werden. In einem derartigen Media Gateway Controller wird der Ausfall einer peripheren Einrichtung in der Regel sehr schnell erkannt, was zur Ersatzschaltung auf die redundante periphere Einrichtung führt.

Da jede der redundanten peripheren Einrichtungen jedoch eine eigene Paketadresse hat, bedeutet dies zum einen, dass vom Access Gateway/ Media Gateway aus betrachtet insgesamt zwei Media Gateway Controller existieren. Zum anderen ändert sich die Paketadresse für die Kommunikation mit dem Access Gateway/ Media Gateway im Rahmen der Ersatzschaltung, was für das angeschlossenen Access Gateway/ Media Gateway zum temporären Verlust der Kommunikation mit dem Media Gateway Controller führt. Infolge des Kommunikationsverlustes mit dem Media Gateway Controller ist es nun erforderlich, dass das Access Gateway/ Media Gateway den Kommunikationsverlust erkennt und selbständig auf die in Betrieb konfigurierte redundante periphere Einrichtung umschaltet. Die Ersatzschaltung (Neuregistrierung an der redundanten peripheren Einrichtung) erfolgt allerdings frühestens nach einer Schutzzeit von 30s (im Falle des H.248 Protokolls). Diese dient der Überbrückung von Störungen im IP-Netz, die nicht zu ungewolltem Ersatzschalten führen sollen, um nicht durch temporäre Störungen des Netzes empfindlich gegen ungewolltes Hin- und Herschalten zwischen den redundanten peripheren Einrichtungen eines Media Gateway Controllers zu werden.

Der RFC3015 (November 2000), Abschnitt 11.5, offenbart solche Ersatzschaltung im Falle des Megaco Protokolls.

Problematisch an diesem Stand der Technik ist, dass für die Dauer der Umschaltung die Teilnehmer/ Verbindungsleitungen nicht erreichbar sind. Stabile Verbindungen können ebenso verloren gehen wie Signalisierungsnachrichten. Eine falsche Vergebührung durch zu lange Ersatzschaltezeiten ist ebenso unerwünscht, wie der Ausfall stabiler Verbindungen. Für Datenübertragungen können diese Ersatzschaltezeiten durchaus noch toleriert werden, für Videoübertragung oder gar Sprachübertragung sind sie allerdings vollkommen inakzeptabel.

Die Patentanmeldung EP 1 056 256 A2 offenbart ein Verfahren zur Steuerung eines H.323 Client Terminals, der an wenigstens zwei Gatekeeper herangeführt wird, wobei vom Client Terminal eine Registrierung bei den wenigstens beiden Gatekeepern zugleich vorgenommen wird, wodurch wenigstens zwei paketbasierte Signalisierungsverbindungen aufgebaut werden, aber lediglich eine davon vermittlungstechnisch aktiviert wird.

Der Erfindung liegt daher die Aufgabe zugrunde, einen Weg aufzuzeigen, wie das Media Gateway eines paketbasierten Netzes derart von einem Media Gateway Controller gesteuert werden soll, damit die Ersatzschaltezeiten im Ersatzschaltefall minimiert werden können.

Diese Aufgabe wird ausgehend von den im Oberbegriff von Patentanspruch 1 angegebenen Merkmalen durch die im kennzeichnenden Teil beanspruchten Merkmale gelöst.

Ein wesentlicher Vorteil der Erfindung ist in der Schnelligkeit des Umschaltens zu sehen. Dies wird durch den Media Gateway Controller erreicht, der die Ersatzschaltung auf die redundanten Protoköllschnittstellen im Falle des Ausfalls einer peripheren Einrichtung der paketbasierten Vermittlungsstelle steuert. Da die redundante Protokollschnittstelle bereits initialisiert ist, kann sie sofort und ohne Zeitverzug nach dem Ausfall vermittlungstechnisch benutzt werden. Dies minimiert/ vermeidet die Nichterreichbarkeit oder Nichtbedienbarkeit von Teilnehmern am Access Gateway/ Media Gateway. Hierdurch müssen stabile Verbindungen auch nicht wegen potentiell falscher Vergebührung ausgelöst werden. Grundsätzlich wird mit der Erfindung eine einfache, robuste Lösung mit hoher Teilnehmerverfügbarkeit bereitgestellt, die mit nur geringer Unterstützung durch das Access Gateway/ Media Gateway auskommt.

Ein weiterer Vorteil der Erfindung ist darin zu sehen, dass teuere Implementierungen, die z. B. die Redundanz der peripheren Einrichtungen mit der Eigenschaft, eine einzige paketbasierte Adresse in Richtung Media Gateway zu bieten und die aktuellen Schnittstellendaten (z. B. die Paketadreesse und Portnummer des Media Gateways) auf eine den Vermittlungsbetrieb übernehmende periphere Einrichtung replizieren zu können, vermieden wird.

Weiterer Vorteil ist, dass Lösungsalternativen, die mit proprietären Protokollerweiterungen und Veränderungen der Funktionalität des Protokollstacks einhergehen - was im übrigen eine Änderung der Philosophie bedeuten würde - ebenfalls vermieden werden. Die benutzten Schnittstellen bleiben für sich betrachtet völlig standardkonform, proprietäre Erweiterungen sind nicht erforderlich.

Ein besonderer Vorteil der Erfindung ist in der universellen Einsetzbarkeit zu sehen. Das Verfahren ist für beliebige paketbasierte Signalisierungsprotokolle wie beispielsweise H.248, H.323, SIP, SIP-T anwendbar. Darüber hinaus werden Netzausfälle vor dem Edge Router am paketbasierten Vermittlungssystem abgedeckt. Das Verfahren ist in gleicher Weise auch für reine Trunk Gateways und paketbasierte Server (IVR, Konferenz, Media Server) einsetzbar.

Vorteilhafte Weiterbildungen der Erfindung sind in den abhängigen Ansprüchen angegeben.

So kann die Zuverlässigkeit der Anbindung des Access Gateways/ Media Gateways durch Austausch zyklischer Testnachrichten (Auditierung) der redundanten Schnittstelle und eine gegebenenfalls entsprechende Bedieneralarmierung erhöht werden. Weitere Ausgestaltungen sind die Einführung von n:1 Redundanz der redundanten peripheren Einrichtungen, der Load Sharing Betrieb über die redundanten Protokollschnittstellen, das Vorsehen von virtuellen Access Gateways/ Media Gateways mit den voranstehend beschriebenen Schnittstellen, eine additive Call Context Replikation (inklusive Stack-Anteile) zum Retten stabiler und transienter Verbindungen sowie das automatische Rückschalten von Access Gateways/ Media Gateways nach Reparatur einer peripheren Einrichtung zur Erhöhung der Beschaltbarkeit der paketbasierten Vermittlungsstelle (Vermeidung von peripheren Einrichtungen im reinen stand-by Zustand).

Die Erfindung wird im folgenden anhand eines figürlich dargestellten Ausführungsbeispiels näher erläutert.

Es zeigen:
- Figur 1: die grundsätzlichen Verhältnisse bei der Anbindung eines Access Gateways/ Media Gateways an einen Media Gateway Controller
- Figur 2: eine Konfiguration, auf der das Ersatzschalteverfahren gemäss der Erfindung abläuft
- Figur 3: die Anbindung einer Mehrzahl von Access Gateways/Media Gateways an einen Media Gateway Controller.

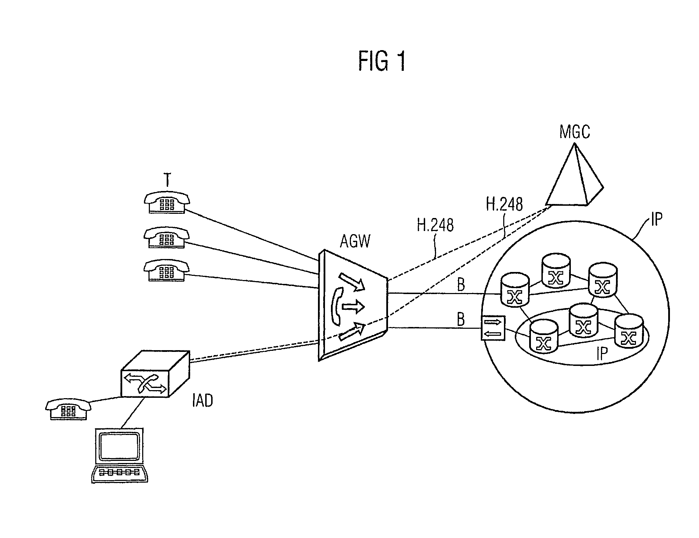

In Fig. 1 ist ein Internetnetz IP aufgezeigt, das über Bearerverbindungen B an ein Media Gateway herangeführt ist. Letzters ist als Access Gateway AGW ausgebildet und teilnehmerseitig mit ISDN/ PSTN Teilnehmern T verbunden. Typischerweise können hier die von Access Networks und Teilnehmerkonzentratoren bekannten Anschlusszahlen von (mehreren 1000) PSTN und ISDN Teilnehmern erreicht werden. Weiterhin ist das Access Gateway AGW mit Abschlusseinrichtungen IAD verbunden, die die Funktion eines Media Gateways aufweisen können. Das Access Gateway AGW ist beispielhaft über ein H.248 Protokoll mit einer paketbasierten Vermittlungsstelle MGC verbunden.

Diese wird auch als Media Gateway Controller, Call Feature Server, Call Control Server oder speziel im Zusammenhang mit dem H.323 Protokoll Gatekeeper genannt. Gemäss vorliegendem Ausführungsbeispiel wird ein H.248 Protokoll verwendet. Die in Fig. 1 eingezeichnete H.248-Signalisierung ist logisch zwischen Access Gateway AGW/ IAD und der paketbasierten Vermittlungsstelle MGC in der abgebildeten Weise geführt. Real wird der Signalisierungsweg ebenfalls über das Internetnetz IP geführt, was aus Gründen der Übersichtlichkeit der Fig. 1 jedoch nicht explizit dargestellt ist.

Grundsätzlich ist anzumerken, dass die Ausbildung des Media Gateways als Access Gateways lediglich ein Beispiel darstellt. Ebenso können anstelle von Access Gateways Trunk Gateways mit Verbindungsleitungen und ohne Teilnehmer oder Access Gateways mit Teilnehmern und ohne Verbindungsleitungen verwendet werden. Haben die genannten Gateways nur sehr wenige Teilnehmer bzw. und befinden sich im häuslichen Umfeld des Kunden, spricht man auch oft von Residential Gateways. Die im folgenden angesprochenen IADs und MTAs fallen unter diese Bezeichnung.

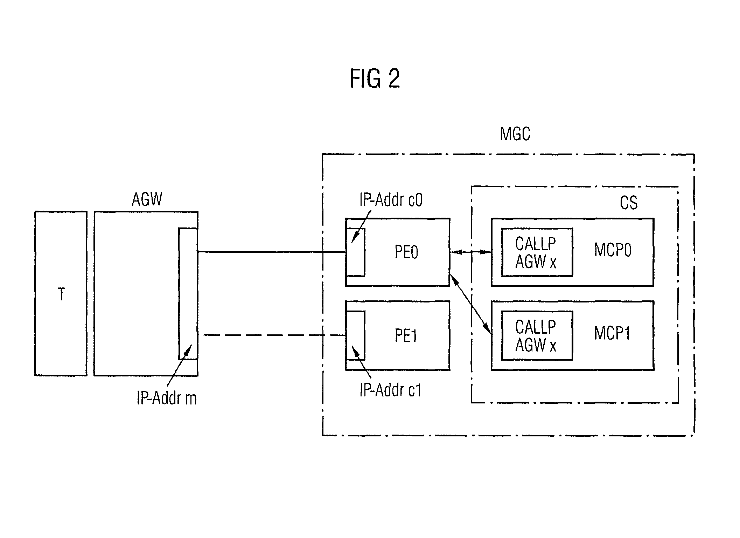

In Fig. 2 ist der Media Gateway Controller MGC detaillierter aufgezeigt. Er besteht aus peripheren Schnittstelleneinheiten oder Einrichtungen PE (PE0, PE1) mit Zugriff auf die physikalische paketbasierte, z. B. IP-basierte Schnittstelle sowie aus weiteren als Core System CS bezeichneten Einheiten, welche u. a. zuständig sind für Call Control, Nutzkanalsteuerung, Vergebührung, Bedienerschnittstelle usw.. Aus Gründen der Zuverlässigkeit sind alle Komponenten des Media Gateway Controllers MGC i.a. redundant ausgelegt.

Grundsätzlich meldet sich ein Access Gateway AGW nach Inbetriebnahme bei dem Media Gateway Controller MGC an. Im Rahmen dieser Anmeldung werden die Verbindungsdaten (H.248 Association Handle) des H.248- Protokolls zwischen dem Access Gateway AGW und dem Media Gateway Controller MGC ausgetauscht.

Sodann setzt der normale Vermittlungsverkehr für die dieser Signalisierungsbeziehung zugeordnete Trunk- oder Teilnehmergesamtheit ein. Der Media Gateway Controller MGC kann zu jeder Zeit dem Access Gateway AGW mitteilen, einen anderen Media Gateway Controller MGC zu benutzen, wonach die Neuregistrierung des Access Gateway AGW mit den zugeordneten Terminations bei dem vorgegebenen Controller erfolgt.

Um lange Ersatzschaltezeiten bei Ausfall einer der peripheren Einrichtungen des Media Gateway Controllers MGC zu verhindern, wird erfindungsgemäss vorgesehen, dass sich das Access Gateway AGW im Rahmen der Inbetriebnahme oder des Wiederanlaufs für die gleiche Teilnehmergesamtheit bei der peripheren Einrichtung PE0 und der peripheren Einrichtung PE1 des Media Gateway Controller MGC zugleich anmeldet. Für diese beiden zusammengehörigen Registrierungen werden eine erste Paketadresse der peripheren Einrichtung PE0 und eine zweite Paketadresse der peripheren Einrichtung PE1 benutzt. Die Registrierung kann beim Hochlauf des Access Gateway AGW durch das H.248 Service Change Restart Kommando für eine Teilnehmergesamtheit zu den beiden peripheren Einrichtungen PE0 und PE1 des Media Gateway Controllers MGC erfolgen. Für andere paketbasierte Protokolle wie H.323, SIP, SIP-T existieren vergleichbare Kommandos.

Der Media Gateway Controller MGC entscheidet dann aufgrund von Konfigurationsdaten und weiterer eventuell dynamischer Kriterien, dass entweder die periphere Einrichtung PE0 oder PE1 für die Mehrzahl der Teilnehmer (Teilnehmergesamtheit) vermittlungstechnisch aktiv werden soll. Gemäss vorliegendem Ausführungsbeispiel wird davon ausgegangen, dass dies die periphere Einrichtung PE0 sein soll. Mit dieser Festlegung wird der Media Gateway Controller MGC alle Teilnehmersignalisierungsdaten und Signalisierungsdaten zur Nutzkanalsteuerung über die periphere Einrichtung PE0 und das über diese angemeldete Protokollinterface an das Access Gateway AGW übermitteln.

Mit dieser Festlegung wird aber auch ausschließlich die periphere Einrichtung PE0 für die Teilnehmersignalisierung des Access Gateway AGW und Nachrichten zur Nutzkanalsteuerung empfangsbereit sein und diese verarbeiten. Die periphere Einrichtung PE1 wird weder Teilnehmer-oder Nutzkanalsignalisierung an das Access Gateway AGW übermitteln, noch wird es von dort kommende Teilnehmer-oder Nutzkanalsignalisierung verarbeiten oder positiv quittieren. In diesem Normalbetriebsfall ist damit eine standardkonforme Bedienung des Access Gateway AGW durch die paketbasierte Vermittlungsstelle gewährleistet.

Im folgenden wird nun davon ausgegangen, dass die bislang aktivierte periphere Einrichtung PE0 ausfällt. Der Ausfall führt zur schnellen Ersatzschaltung auf die periphere Einrichtung PE1 des Media Gateway Controllers MGC, die den Ausfall durch Übermitteln von vermittlungstechnisch relevanten Nachrichten dem Access Gateway AGW zuführt. Letzteres interpretiert den Empfang dieser vermittlungstechnisch relevanten Nachrichten über diese Protokollschnittstelle als Umschaltekriterium und sendet fortan seine vermittlungstechnischen und nutzkanalrelevanten Signalisierungsnachrichten ebenfalls über die der peripheren Einrichtung PE1 zugehörige Protokollschnittstelle. Optional kann zusätzlich auch eine explizit als Umschaltekriterium zu wertende, standardkonforme Nachricht, die exklusiv als Umschaltekrierium benutzt wird, durch die periphere Einrichtung PE1 ausgebracht werden. Dies kann vorzugsweise z. B. ein Audit/ Statusabfrage-Kommando sein, das von den peripheren Einrichtungen PE nur zum Zwecke des Steuerns des Umschaltens des Access Gateway AGW ausgebracht wird.

Das Audit/ Statusabfrage-Kommando dient als expliziter Trigger und kann beispielsweise ein speziell als Aktivschaltekommando zu interpretierendes Audit Value Kommando des H.248-Protokolls sein. Auf der zweiten Protokollschnittstelle zur peripheren Einrichtung PE1 werden in niederer Frequenz bei spielsweise ebenfalls H.248 Audit Value Kommandos gesendet, die vom Access Gateway AGW zu quittieren sind. Durch die Quittungen stellt der Media Gateway Controller MGC sicher, dass eine frühzeitige Alarmierung des Bedieners bei Ausfall der redundanten Protokollschnittstelle erfolgt und eine gegebenenfalls nicht erfolgte Ersatzschaltung auf die periphere Einrichtung PE1 unterbleibt.

Da über die periphere Einrichtung PE1 bereits die Protokollschnittstelle für den Zugriff auf die gleiche Teilnehmergesamtheit etabliert ist, kann sie sofort aktiv mit dem Access Gateway AGW kommunizieren. Die periphere Einrichtung PE1 braucht nicht zu warten, bis der Ausfall der peripheren Einrichtung PE0 durch das Access Gateway AGW erkannt wurde und die dem Paketnetz eigene Schutzzeit in der Größenordnung von 30s verstrichen ist. Die Teilnehmersignalisierung und die Signalisierung zur Nutzkanalsteuerung werden mit dem Umschalten auf die periphere Einrichtung PE1 in Richtung Access Gateway AGW über die bisher nicht vermittlungstechnisch genutzte, standardkonforme Protokollschnittstelle übermittelt.

Da das Access Gateway AGW den Kontakt mit der peripheren Einrichtung PE0 ausfallbedingt verloren hat, versucht es, sich zyklisch in gewissem zeitlichem Abstand erneut bei dieser über die zweite, ehemals aktive Protokollschnittstelle anzumelden. Dies geschieht so lange, bis sich nach Reparatur der Erfolg einstellt. Nach der Reparatur der peripheren Einrichtung PE0 quittiert diese die Anmeldung des Access Gateway AGW über die Protokollschnittstelle an die periphere Einrichtung PE0. Diese Schnittstelle wird nun aber nicht vermittlungstechnisch aktiv geschaltet. Nur die periphere Einrichtung PE1 wird weiterhin für Teilnehmersignalisierung des Access Gateway AGW und Nachrichten zur Nutzkanalsteuerung empfangsbereit sein und diese verarbeiten. Die periphere Einrichtung PE0 wird weder Teilnehmer -oder Nutzkanalsignalisierung an das Access Gateway AGW ausbringen noch wird es von dort kommende Teilnehmer -oder Nutzkanalsignalisierung verarbeiten oder positiv quittieren.

Ein Zurückschalten des Vermittlungsbetriebs auf die periphere Einrichtung PE0 unterbleibt aus Gründen drohenden Verlustes von Verbindungen im Verbindungsaufbau, Features in stabilen Verbindungen und aufgrund der Tatsache, dass sich i.a. keine sonstigen Vorteile hierdurch ergeben. Liegen Forderungen nach Vermeidung von stand-by Einheiten vor, so kann durch Zuordnung von mindestens zwei in sich redundanten Schnittstellen zu u. U. verschiedenen AGWs zu den beiden peripheren Einrichtungen PE0 und PE1 eine Lastteilung für den Normalbetrieb erreicht werden. Ist das die gewünschte Normalbetriebssituation, so muss nach Reparatur der PE0 die zugehörige AGW-Schnittstelle auf die PE0 zurückgeschaltet werden. Dies ist aus Sicht des Verfahrens möglich, jedoch aus Sicht der u. U. betroffenen Verbindungen nachteilig.

In einer Ausgestaltung der Erfindung wird vorgesehen, dass die redundante Protokollschnittstelle nicht überwacht wird. Stattdessen können die zugehörigen Protokolldaten in dem Media Gateway Controller MGC repliziert und ausfallsicher hinterlegt werden, so dass sie nach Reparatur der peripheren Einrichtung PE1 erneut genutzt werden können.

Optional kann auf der jeweils vermittlungstechnisch nicht aktiven Protokollschnittstelle eine zyklische Auditierung zur Überwachung vorgenommen werden, ob diese Protokollschnittstelle noch aktiv ist, und zur Einleitung bereinigender Massnahmen. Dieses Audit dient dem Access Gateway AGW und dem Media Gateway Controller MGC dazu, den Bediener im Vorfeld einer potentiellen Ersatzschaltemassnahme über die verlorene Schnittstellenredundanz zu informieren. Von Seiten des Access Gateway AGW kann dies auch als Entscheidungskriterium zum Ersatzschalten auf eine weitere paketbasierte Vermittlungsstelle herangezogen werden.

Ist die Kommunikation über die vermittlungstechnisch nicht genutzte Protokollschnittstelle zusammengebrochen und liegt kein Access Gateway AGW-veranlasstes Umschalten auf einen weiteren Media Gateway Controller MGC vor, so versucht das Access Gateway AGW sich zyklisch erneut an der zugehörigen peripheren Einrichtung PE zu registrieren, wobei im Erfolgsfalle die Daten und Adressen der Protokollschnittstelle erneut zwischen Access Gateway AGW und adressierter peripherer Einrichtung PE ausgetauscht werden.

Einige IP-Protokolle wie H.248 und H.323 gestatten es definitionsgemäß nicht, dass das als Media Gateway Controller MGC agierende Netzelement Nachrichten an nicht registrierte Terminals oder Gateways übermittelt bzw. das AGW ohne Verfügbarkeit und Zustimmung des Controllers (Gatekeeper), bei dem es registriert ist, vermittlungstechnisch für einen weiteren Controller (Gatekeeper) aktiv wird. Hiermit wird ein AGW - getriebenes Ersatzschalten erzwungen, das bei Verwendung nur einer Protokollschnittstelle im vorliegenden Szenario von redundanten peripheren Einrichtungen mit unterschiedlichen Paketadressen zwangsläufig zu Ausfallzeiten der Teilnehmer am AGW führen muss.

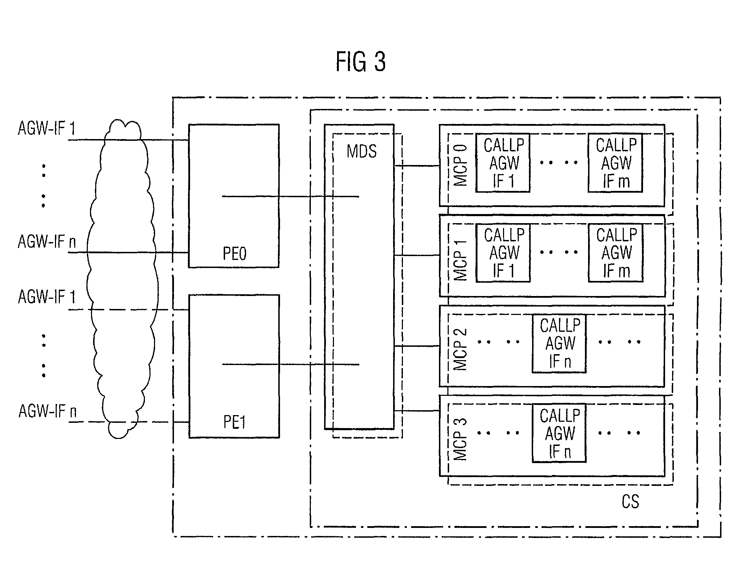

Abschließend sei auf Fig. 3 verwiesen, wo die Anbindung von mehreren Access Gateways AGW-IF1 ... AGW-IFn an einen Media Gateway Controller MGC aufgezeigt ist.

## Patentansprüche

1. Verfahren zur Steuerung eines Media Gateways (AGW), über das eine Mehrzahl von Teilnehmern (T) und/ oder Verbindungsleitungen (V) an wenigstens zwei Media Gateway Controller (PE0, PE1) herangeführt wird,
**dadurch gekennzeichnet,**
**dass** vom Media Gateway (AGW) eine Registrierung bei den wenigstens beiden Media Gateway Controllern (PE0, PE1) zugleich vorgenommen wird, wodurch wenigstens zwei paketbasierte Signalisierungsverbindungen aufgebaut werden, aber lediglich eine davon nach Maßgabe eines Auswahlkriteriums für die gleiche Mehrzahl der Teilnehmer und Verbindungsleitungen vermittlungstechnisch aktiviert wird, und
**dass** die Registrierung im Rahmen der Inbetriebnahme des Gateways (AGW) erfolgt.

2. Verfahren nach Anspruch 1,
**dadurch gekennzeichnet,**
**dass** jeder der Media Gateway Controller (PE0, PE1) über eine eigene IP Adresse erreichbar ist.

3. Verfahren nach Anspruch 1, 2,
**dadurch gekennzeichnet,**
**dass** die wenigstens zwei Media Gateway Controller (PE0, PE1) redundant zueinander angeordnet sind.

4. Verfahren nach Anspruch 1, 2 oder 3,
**dadurch gekennzeichnet,**
**dass** das Auswahlkriterium von den wenigstens zwei Media Gateway Controllern (PE0, PE1) nach Maßgabe von Konfigurationsdaten und/ oder dynamischen Zustandsvariablen definiert wird.

5. Verfahren nach Anspruch 1 bis 4,
**dadurch gekennzeichnet,**
**dass** eine Änderung des Auswahlkriteriums dem Media Gateway (AGW) mitgeteilt wird, indem diesem über die nicht für die gleiche Mehrzahl der Teilnehmer und Verbindungsleitungen vermittlungstechnisch aktivierte paketbasierte Signalisierungsverbindung vermittlungstechnisch relevante Nachrichten übermittelt werden, was vom Media Gateway (AGW) als Umschaltekriterium interpretiert wird.

6. Verfahren nach Anspruch 1 bis 4,
**dadurch gekennzeichnet,**
**dass** eine Änderung des Auswahlkriteriums dem Media Gateway (AGW) mitgeteilt wird, indem diesem über die nicht für die gleiche Mehrzahl der Teilnehmer und Verbindungsgleitungen vermittlungstechnisch aktivierte paketbasierte Signalisierungsverbindung eine vom Media Gateway (AGW) als Umschaltekriterium zu wertende, exklusiv genutzte standardkonforme Nachricht übermittelt wird.

7. Verfahren nach Anspruch 1 bis 4,
**dadurch gekennzeichnet,**
**dass** die Zuverlässigkeit der Anbindung des Media Gateways (AGW) durch Austausch zyklischer Testnachrichten zwischen den wenigstens beiden Media Gateway Controllern (PE0, PE1) und dem Media Gateway (AGW) sowie der Verwendung entsprechender Bedieneralarmierung erhöht wird.

8. Verfahren nach einem der vorstehenden Ansprüche,
**dadurch gekennzeichnet,**
**dass** ein Loadsharing-Betrieb vorgesehen ist, in dem die Signalisierungsverbindung pro Port definiert wird.

9. Verfahren nach einem der vorstehenden Ansprüche,
**dadurch gekennzeichnet,**
**dass** die wenigstens beiden Media Gateway Controller (MGC) aus Sicht des Netzes als periphere Schnittstelleneinrichtungen ausgebildet sind.

10. Verfahren nach einem der vorstehenden Ansprüche,
**dadurch gekennzeichnet,**
**dass** das Media Gateway als Trunk Gateway mit Verbindungsleitungen und ohne Teilnehmer oder als Access Gateway mit Teilnehmern und ohne Verbindungsleitungen ausgebildet ist.

## Claims

1. Method for control of a media gateway (AGW), via which a plurality of subscribers (T) and/or trunks (V) are routed to at least two media gateway controllers (PE0, PE1),
**characterised in that**,
a registration with the at least two media gateway controllers (PE0, PE1) is undertaken at the same time by the media gateway (AGW), with at least two packet-based signalling connections being established, but only one of these being activated for call processing as a function of a selection criterion for the same plurality of subscribers and trunks, and that the registration is undertaken within the framework of commissioning of the media gateway (AGW).

2. Method according to claim 1,
**characterised in that**
each of the media gateway controllers (PE0, PE1) is accessible via its own IP address.

3. Method in accordance with claim 1, 2
**characterised in that**
the at least two media gateway controllers (PE0, PE1) are arranged redundantly to each other.

4. Method according to claim 1, 2 or 3,
**characterised in that**
the selection criterion of the at least two media gateway controllers (PE0, PE1) is defined according to configuration data and/or dynamic status variables.

5. Method according to claim 1 to 4,
**characterised in that**
a change to the selection criterion is notified to the media gateway (AGW) **in that** messages of call processing relevance are transmitted to the media gateway over the signalling connection not activated for call processing for the same plurality of subscribers and trunks, which is interpreted by the media gateway (AGW) as a switchover criterion.

6. Method according to claim 1 to 4
**characterised in that**
a change of the selection criterion is notified to the media gateway (AGW) by an exclusively-used standard compliant message to be classified by the media gateway (AGW) as a switchover criterion being transferred to the gateway over the packet-based signalling connection not activated for call processing for the same plurality of subscribers and trunks.

7. Method according to claim 1 to 4,
**characterised in that**
the reliability of the connection of the media gateway (AGW) is increased by exchange of cyclic test messages between the at least two media gateway controllers (PE0, PE1) and the media gateway (AGW) as well as the use of corresponding operator alarms.

8. Method according to one of the previous claims,
**characterised in that**
there is provision for loadsharing operation in which the signalling connection is defined per port.

9. Method according to one of the previous claims,
**characterised in that**
the at least two media gateway controllers (MGC) are embodied from the network standpoint as peripheral interface devices.

10. Method according to one of the previous claims,
**characterised in that**
the media gateway is embodied as a trunk gateway with trunks and without subscribers or as an access gateway with subscribers and without trunks.

## Revendications

1. Procédé pour la commande d'une passerelle média (AGW), par laquelle une pluralité d'abonnés (T) et/ou des lignes de liaison (V) est rapprochée d'au moins deux contrôleurs de passerelle média (PE0, PE1),
**caractérisé en ce que**
la passerelle média (AGW) effectue en même temps un enregistrement auprès des au moins deux contrôleurs de passerelle média (PE0, PE1), de sorte qu' au moins deux liaisons de signalisation basées sur les paquets sont établies, mais qu'uniquement l'une d'entre elles est activée en fonction d'un critère de choix pour la même pluralité des abonnés et lignes de liaison, et **en ce que** l'enregistrement s'effectue dans le cadre de la mise en service de la passerelle média (AGW).

2. Procédé selon la revendication 1,
**caractérisé en ce que**
chacun des contrôleurs de passerelle média (PE0, PE1) peut être joint par une adresse IP propre.

3. Procédé selon la revendication 1, 2,
**caractérisé en ce que**
les au moins deux contrôleurs de passerelle média (PE0, PE1) sont disposés de façon redondante l'un par rapport à l'autre.

4. Procédé selon la revendication 1, 2 ou 3
**caractérisé en ce que**
le critère de choix des au moins deux contrôleurs de passerelle média (PE0, PE1) est défini en fonction de données de configuration et/ou de variables d'état dynamiques.

5. Procédé selon les revendications 1 à 4,
**caractérisé en ce que**
une modification du critère de choix est signalée à la passerelle média (AGW) par le fait que des informations importantes au niveau de la commutation sont transmises à cette passerelle média par la liaison de signalisation basée sur les paquets et non activée au niveau de la commutation pour la même pluralité des abonnés et des lignes de liaison, ce qui est interprété par la passerelle média (AGW) comme un critère de commutation.

6. Procédé selon les revendications 1 à 4,
**caractérisé en ce que**
une modification du critère de choix est signalée à la passerelle média (AGW) par le fait qu'un message conforme au standard, utilisé de façon exclusive et à considérer par la passerelle média (AGW) comme critère de commutation est transmis à cette passerelle média par la liaison de signalisation basée sur les paquets, non activée pour la même pluralité des abonnés et les lignes de liaison.

7. Procédé selon les revendications 1 à 4,
**caractérisé en ce que**
la fiabilité du rattachement de la passerelle média (AGW) est améliorée par l'échange de messages test cycliques entre les au moins deux contrôleurs de passerelle média (PE0, PE1) et la passerelle média (AGW) et l'utilisation d'une mise en alerte appropriée de l'opérateur.

8. Procédé l'une quelconque des revendications précédentes,
**caractérisé en ce que**
il est prévu un mode Loadsharing dans lequel la liaison de signalisation est définie par port.

9. Procédé l'une quelconque des revendications précédentes,
**caractérisé en ce que**
les au moins deux contrôleurs de passerelle média (MGC) sont conçus du point de vue du réseau comme des dispositifs d'interface périphériques.

10. Procédé selon l'une quelconque des revendications précédentes,
**caractérisé en ce que**
la passerelle média est conçue comme Trunk Gateway avec des lignes de liaison et sans abonné ou comme passerelle d'accès avec des abonnés et sans lignes de liaison.
